# EUROPÄISCHE PATENTSCHRIFT

(11) **EP 3 113 915 B1**
(45) Veröffentlichungstag und Bekanntmachung des Hinweises auf die Patenterteilung: **13.09.2023**
(21) Anmeldenummer: 15712080.9
(22) Anmeldetag: 05.03.2015
(51) Int. Cl.: B25J 15/00, B23P 19/04, B29C 65/00, B29C 65/02, B29C 65/18, B29C 65/78, B29L 31/30, B64F 5/10

(54) **FÜGEWERKZEUG, FÜGEEINRICHTUNG UND FÜGEVERFAHREN**
JOINING TOOL, JOINING DEVICE AND JOINING METHOD
OUTIL D'ASSEMBLAGE, DISPOSITIF D'ASSEMBLAGE ET PROCÉDÉ D'ASSEMBLAGE

(30) Priorität: 06.03.2014 DE 202014101000 U
(43) Veröffentlichungstag der Anmeldung: 11.01.2017
(73) Patentinhaber: KUKA Systems GmbH, 86165 Augsburg (DE)
(72) Erfinder: HÄNTZSCHEL, Jörg, 86159 Augsburg (DE); STROBL, Norbert, 86508 Rehling (DE)
(74) Vertreter: Ernicke, Klaus Stefan
(86) Internationale Anmeldenummer: PCT/EP2015/054557
(87) Internationale Veröffentlichungsnummer: WO 2015/132316

(56) Entgegenhaltungen:
- EP-A1- 2 596 904
- DE-A1-102007 028 581
- DE-A1-102008 041 190
- DE-A1-102011 114 015

## Beschreibung

Die Erfindung betrifft ein Fügewerkzeug, eine Fügeeinrichtung und ein Fügeverfahren mit den Merkmalen im Oberbegriff der Verfahrens- und Vorrichtungshauptansprüche.

Aus der Praxis ist es beim Flugzeugbau bekannt, Stringer manuell an flexiblen Flächenstrukturen, insbesondere an flexiblen Häuten von Flugzeugteilen zu montieren.

Die EP 2 388 194 A2 und EP 2 596 904 A1 zeigen ein robotergeführtes Fügewerkzeug und eine Fügeeinrichtung mit mehreren Industrierobotern zum automatisierten Fügen von Stringern an einer Flugzeughaut. Das Fügewerkzeug weist einen Greifer, Führungs- und Andrückrollen sowie eine Heizeinrichtung auf, wobei der Greifer zunächst in die Stirnöffnung des profilierten Stringers greift und den Stringer nach dessen Aufsetzen auf der Flugzeughaut loslässt. Der Industrieroboter bewegt anschließend das Fügewerkzeug kontinuierlich entlang des Stringers, wobei es mit den drehenden Führungs- und Andrückrollen auf dem Stringer abwälzt.

Die DE 10 2007 028 581 A zeigt ein Verfahren und eine Vorrichtung zum Fügen von CFK-Dachmodulen mit einem metallischen Dachrahmen eines Fahrzeugs mittels einer robotergeführten Haltevorrichtung. Diese weist eine Grundplatte mit heb- und senkbaren Sauggreifern und mit unbeheizten Abstandselementen auf, welche als Gegenhalter die Kontur des dreidimensional gewölbten Dachmoduls nachbilden und jeweils gesteuert so verfahren werden, dass ihre Kontaktflächen, an denen das Dachmodul zum Anliegen kommen wird, eine dreidimensional gewölbte Fläche definieren, die der Oberfläche des Dachmoduls entspricht. Nach dem Klebstoffauftrag und dem Fügen des Dachmoduls mit dem Dachrahmen durch Andrücken mittels der umgesteuerten Sauggreifer wird der Fügebereich mittels verfahrbarer Spot-Induktoren durch Erzeugung eines Wirbelstroms in dem metallischen Dachrahmen bereichsweise erwärmt. Die Spot-Induktoren werden soweit verfahren, bis sie in einem definierten Kopplungsabstand zu der Oberfläche des Dachmoduls stehen.

Die DE 10 2011 114 015 A1 betrifft einen Roboter-Endeffektor, für die Handhabung von Faserzuschnitten und deren Fixierung mittels eines Bindermaterials an einem anderen Faserzuschnitt. An einer Trägerplatte des Endeffektors sind Sauggreifer stationär angeordnet. Neben den Sauggreifer sind beheizte Andrückstempel verfahrbar angeordnet, die mittels eines Andrück-Stellantriebs entlang der Andrückrichtung zwischen einer Parkstellung und einer Betriebsstellung verstellbar ist. In der Parkstellung sind die Andrückstempel zurückgezogen, so dass ein Greifen eines Faserzuschnitts mittels der Sauggreifer möglich ist, ohne dass die Andrückstempel in Eingriff mit dem Faserzuschnitt kommen. In der ausgefahrenen Betriebsstellung kommen die Andrückstempel in Eingriff mit dem gegriffenen Faserzuschnitt und drücken diesen an eine Unterlage bzw. an einen anderen Faserzuschnitt an und beheizen ihn.

Die EP 2 596 904 zeigt ein Fügewerkzeug und ein Verfahren zum Rollfügen von langen Profilkörpern an Bauteilen. Hierbei halten mehrere Roboter zusammen den Profilkörper, der beim Fügen an einem Ende schwebend über dem Bauteil gehalten und am anderen Ende am Bauteil angelegt wird sowie anschließend mit dem Fügewerkzeug am Bauteil angerollt und unter Beheizung angedrückt wird.

Es ist Aufgabe der vorliegenden Erfindung, die Fügetechnik weiter zu verbessern.

Die Erfindung löst diese Aufgabe mit den Merkmalen in den Verfahrens- und Vorrichtungshauptansprüchen.

Die beanspruchte Fügetechnik, d.h. das Fügewerkzeug, die Fügeeinrichtung und das Fügeverfahren, hat Vorteile gegenüber dem Stand der Technik hinsichtlich Positioniergenauigkeit, Prozesssicherheit und Qualität. Auch die Flexibilität der Fügetechnik wird verbessert. Zudem ergeben sich Verbesserungen hinsichtlich der Schnelligkeit und Wirtschaftlichkeit der Fügetechnik.

Das längliche Bauteil, insbesondere ein Stringer, kann besser und genauer gegenüber dem flexiblen Werkstück, insbesondere einer Flächenstruktur oder einem Skin, positioniert, ausgerichtet und gefügt werden. Das Bauteil kann wahlweise komplett und in einem Zug oder allmählich und mit einer abwälzartigen Bewegung an das Werkstück angelegt werden.

Das Fügen kann lokal an mehreren diskreten und beabstandeten Fügestellen entlang des Bauteils gleichzeitig oder nacheinander erfolgen. Hierbei kann der jeweils mit dem Fügewerkzeug gegriffene Bauteilbereich an der Fügestelle für eine vorgegebene Dauer sowie mit einer definierten Kraft und Wärmezufuhr an das Werkstück gepresst werden. Das Anpressen und die Wärmezufuhr erfolgen stationär. Die Fügeverbindung, insbesondere Klebeverbindung, kann dadurch mit exakten und reproduzierbaren Parametern geschaffen werden. Der Fügeprozess und die Qualität der Fügeverbindung sind besser und kontrollierter als mit einem abrollenden Fügewerkzeug.

Zahl, Ort und Größe der Fügestellen sind frei wählbar, wodurch der Fügeprozess flexibel ist und an beliebige Bauteile und Werkstücke sowie deren Erfordernisse angepasst werden kann. Auch der Abstand der diskreten und punktartigen Fügestellen ist wählbar. Durch eine Konzentration und eng benachbarte Fügestellen kann bedarfsweise ein größerer Fügebereich gebildet werden. Der Fügeprozess mit den diskreten und beabstandeten Fügestellen ist eine Art Heftfügen oder Heftkleben.

Das Bauteil wird mit dem Fügewerkzeug an seiner Oberseite gegriffen und gegen das darunter liegende Werkstück gedrückt. Das Fügewerkzeug kann das Bauteil mit einem Hubgreifer, insbesondere Sauggreifer, von oben halten, nach Bildung der lokalen Fügeverbindung loslassen und zur nächsten Fügestelle umgreifen. Eine Verliersicherung verhindert ein Herunterfallen des Bauteils bei einem evtl. Ausfall des Hubgreifers.

Das Fügewerkzeug greift einen über die Länge kurzen Bauteilbereich und drückt diesen an einer eng begrenzten Fügestelle an das Werkstück. Dies ist günstig zum Fügen von Bauteilen und Werkstücken, die eine über die Länge veränderliche Kontour, insbesondere einen gekrümmten Verlauf, lokalen Vorsprünge, Wölbungen oder dgl. haben.

Das Andrücken und die Wärmeeinbringung erfolgen flächig über eine Druckfläche, die an die Kontur des kontaktierten Bauteilbereichs angepasst ist. Die Druckfläche kann kontrolliert beheizt werden, so dass die an der Fügestelle eingebrachte Wärmemenge exakt gesteuert werden kann. Die Kraft- und Wärmeeinleitung verteilen sich über eine definierte Fläche, wobei an der lokalen Fügestelle ein Klebepunkt mit bestimmter Größe und Festigkeit gebildet wird. Bei Omega- oder T-förmigen Bauteilen mit beidseitigen, durchgehenden oder lokalen Flanschen können beidseitige Fügestellen gleichzeitig gebildet werden.

Das Fügewerkzeug kann das Bauteil beim Greifen mit einem Positionierwerkzeug führen, insbesondere zentrieren und etwaige Formabweichungen des biegeelastischen Bauteils ggf. korrigieren. Mittels einer mitgeführten Sensoreinrichtung kann die Fügekraft gesteuert und ggf. geregelt werden. Ferner kann die Relativposition zum Bauteil detektiert werden. Eine externe Messeinrichtung kann zum exakten Einmessen und Positionieren des oder der Bauteile am Werkstück und zur evtl. Positionskorrektur der programmierten Industrieroboter und ihrer Fügewerkzeuge benutzt werden.

Mit der erfindungsgemäßen Fügetechnik kann das Fügen, vorzugsweise ein stoffliches Fügen durch Kleben, Schweißen oder dgl. des Bauteils am Werkstück in der eingenommenen Füge- und Kontaktstellung des Bauteils am Werkstück erfolgen. Der Fügeprozess kann mittels mehrerer Industrieroboter und ihrer Fügewerkzeuge an mehreren Fügestellen über die Bauteilelänge verteilt gleichzeitig stattfinden. Dies verkürzt und verbessert den Fügeprozess. Die beanspruchte Fügetechnik ist für Bauteile mit beliebiger Länge möglich, wobei sich der Qualitätsvorsprung der Erfindung hier besonders stark auswirkt.

In den Unteransprüchen sind weitere vorteilhafte Ausgestaltungen der Erfindung angegeben.

Die Erfindung ist in den Zeichnungen beispielhaft und schematisch dargestellt. Im einzelnen zeigen:
- Figur 1: eine: Montierstation mit einer Fügeeinrichtung in einer perspektivischen Ansicht,
- Figur 2: eine: Stirnansicht der Montierstation gemäß Pfeil II von Figur 1,
- Figur 3 und 4:: Varianten einer Fügeeinrichtung mit mehreren Industrierobotern und Fügewerkzeugen in perspektivischer Ansicht und
- Figur 5 bis 7:: ein Fügewerkzeug in verschiedenen Ansichten.

Die Erfindung betrifft ein Fügewerkzeug (7), eine damit ausgerüstete Fügeeinrichtung (2) und ein Fügeverfahren für Bauteile (9) an Werkstücken (8).

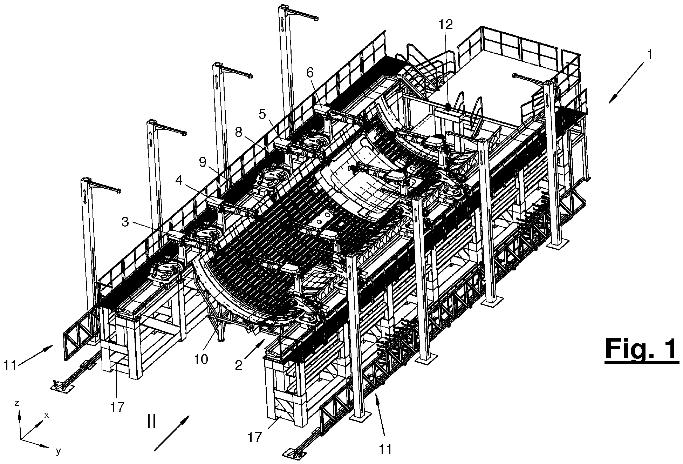

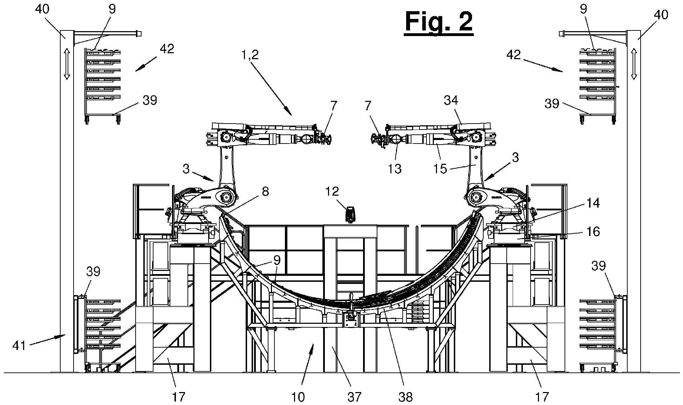

Figur 1 und 2 zeigen eine Fügeeinrichtung (2) und eine Montierstation (1). Die Fügeeinrichtung (2) weist jeweils mehrere programmierbare Industrieroboter (3-6) mit Fügewerkzeugen (7) auf. Zusätzlich können eine Bauteilzuführung (11) und ein Werkstückträger (10) vorhanden sein. Zudem kann eine externe Messeinrichtung (12) für den Fügeprozess vorhanden sein, die bevorzugt berührungslos, insbesondere auf optischem Wege misst und z.B. als Lasertracker ausgebildet ist. Die Fügeeinrichtung (2) kann außerdem eine Sensoreinrichtung (20) aufweisen. Ferner ist eine nicht dargestellte Steuerung vorhanden, an welche die Komponenten der Fügeeinrichtung (2) angeschlossen sind. Dies kann z.B. eine Robotersteuerung oder eine übergeordnete Steuerung sein. Hierüber wird die Fügeeinrichtung (2) nach vorgegebenen Programmen gesteuert.

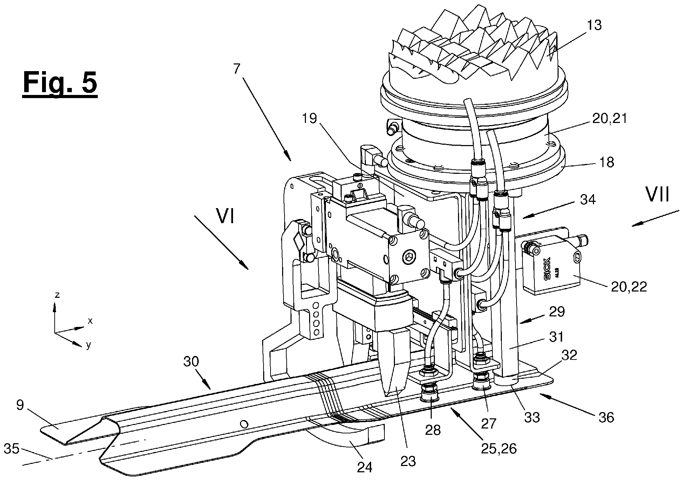

Die Fügeeinrichtung (2) dient zum passgenauen Fügen von länglichen Bauteilen (9) an flexiblen Werkstücken (8). Die Bauteile (9) können eine versteifendende Funktion haben und sind bevorzugt sog. Stringer. Diese sind als lang gestreckte Profile ausgebildet, die z.B. im Querschnitt eine Omega-Form gemäß Figur 5 bis 7 oder eine T-Form (nicht dargestellt) aufweisen. Die Bauteile (9) oder Stringer können eine gerade oder gebogene Erstreckung und eine entsprechende Längsachse (35) haben. Die Profile (9) besitzen einen mittleren erhabenen Bereich und seitliche Flanschflächen zum Fügen. Der erhabene Bereich kann z.B. eine dachartige Profilwölbung beim Omega-Profil oder ein aufrechter Steg beim T-Profil sein. Die Kontakt- und Fügefläche befindet sich jeweils an der Unterseite der Flansche. Die Bauteile (9), insbesondere Stringer, können aus geeigneten Werkstoffen, z.B. Metall oder Kunststoff oder Verbundwerkstoffen bestehen. Dies können Werkstoffe sein, die bei Erhitzen eine Verbindung eingehen, z.B. schmelzen und verkleben oder verschweißen.

Das flexible Werkstück (8) ist bevorzugt eine flexible Flächenstruktur, die im Flugzeugbau, im Fahrzeugbau oder in anderen Bereichen eingesetzt werden kann. Es kann z.B. die Haut (sog. Skin) oder einen Bestandteil der Haut eines Flugzeugteils, z.B. des Flugzeugrumpfes, eines Flügels oder dgl. bilden.

Das Werkstück (8) hat z.B. eine dünnwandige und mehrlagige Ausbildung und ist als Verbundteil, insbesondere als CFK-Teil ausgebildet. Die Werkstücklagen können eine durch Fasern oder dgl. verstärkte Struktur haben und mit einem flüssigen oder pastösen Bindemittel getränkt sein, über das die Werkstücklagen in einem Aushärteprozess oder dgl. dann auch miteinander innig verbunden werden. Das Bindemittel kann insbesondere ein warmaushärtendes Kunstharz sein.

Beim Fügen gehen das Bauteil (9) und das Werkstück (8) durch Wärmezufuhr eine Schmelz- oder Klebeverbindung miteinander ein. Hierbei können z.B. einer oder beide Partner (8,9) oder eine evtl. Zwischenlage schmelzen.

Das Werkstück (8) hat vorzugsweise eine Schalenform und wird für den Fügevorgang von einem Werkstückträger (10) gehalten, geformt und abgestützt. Der Werkstückträger (10) kann Bestandteil der Fügeeinrichtung (2) sein und zu deren Lieferumfang gehören. Der Werkstückträger (10) weist eine schalenförmige Werkstückaufnahme (38) auf, welche die Form des Werkstücks (8) bestimmt. Die Werkstückaufnahme (38) ist vorzugsweise konkav ausgebildet und weist gemäß Figur 1 und 2 mit ihrer Öffnung nach oben. Die Schalenform der Werkstückaufnahme (38) und des Werkstücks (8) kann gerundet sein. Die Innen- und Außenseite des Werkstücks (8) können glattflächig sein.

Das Werkstück (8) kann gemäß Figur 1 und 2 in seiner Längserstreckung entlang der gezeigten x-Achse im Raum eine gleichbleibende oder veränderliche Gestalt haben, z.B. in Form einer Ausbauchung oder Verjüngung. Das Bauteil (9) bzw. der Stringer folgt dieser Formänderung. Das flexible Werkstück (8) kann in der Ausgangslage eine ebene und mattenartige Formgebung haben, wobei es die für den Endzustand gewünschte Schalenform in der Werkstückaufnahme (38) erhält.

Der Werkstückträger (10) kann ein stationäres oder instationäres Gestell (37), z.B. das gezeigte Untergestell mit der darauf angeordneten Werkstückaufnahme (38) aufweisen. Ein instationäres Gestell (37), insbesondere ein Untergestell, kann von einem einachsig oder mehrachsig beweglichen Fördermittel durch die verschiedenen Stationen einer Fertigungsanlage bewegt werden.

Gemäß Figur 1 und 2 werden ein oder mehrere längliche Bauteile (9), insbesondere Stringer, an der breiten Oberfläche, insbesondere der Innenfläche, des Werkstücks (8) gefügt. Die Bauteile (9) erstrecken sich dabei entlang der geraden oder gebogenen Oberfläche des Werkstücks (8).

Für ein oder mehrere Bauteile (9) kann eine in Figur 1 und 2 dargestellte Bauteilzuführung (11) vorgesehen sein, die z.B. seitlich neben dem Werkstückträger (10) angeordnet ist. Die Bauteilzuführung (11) weist ein stationäres oder instationäres Magazin (39), insbesondere ein Bauteilrack, für mehrere Bauteile (9) und ein Zuführgerät (40) auf. Das Zuführgerät (40) hebt z.B. das Magazin (39) von einer unteren Ladeposition (41) auf einem Förderer ab und bringt es in eine übergabegerechte obere Bereitstellungsposition (42) über dem Werkstückträger (10). Das Zuführgerät (40) kann z.B. als Hubgreifer ausgebildet sein.

Beim Fügevorgang werden die ein oder mehreren Bauteile (9) jeweils gegenüber dem bereitgehaltenen Werkstück (8) positioniert und ausgerichtet sowie anschließend gefügt. Der Fügeprozess ist vorzugsweise ein stoffliches Fügen, insbesondere ein Kleben oder Schweißen. In der gezeigten und bevorzugten Ausführungsform wird beim Fügeprozess Wärme lokal und unter Anpressdruck über eine definierte Anpresszeit in das Bauteil (9) und/oder das Werkstück (8) eingebracht. Alternativ kann auch kalt gefügt werden, wobei ein Klebstoff oder ein anderes geeignetes Haft- oder Bindemittel eingesetzt wird.

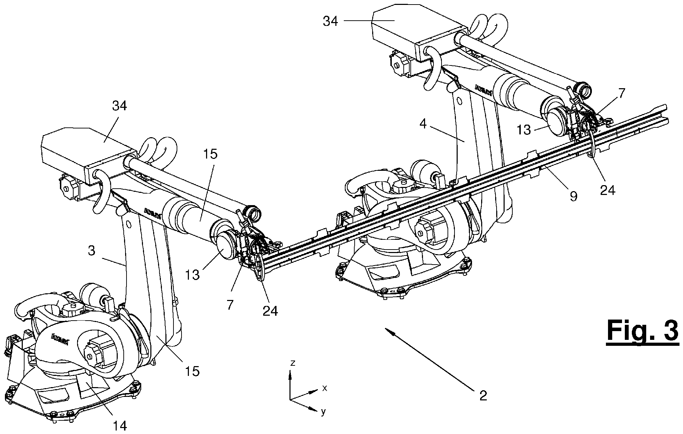

Die Fügeeinrichtung (2) weist zwei oder mehr Industrieroboter (3-6) auf, die mit ihren Fügewerkzeugen (7) ein Bauteil (9) gemeinsam greifen und am Werkstück (8) fügen. Hierbei sind gemäß Figur 3 mindestens zwei in einer Reihe und mit Abstand angeordnete Industrieroboter (3,4) vorhanden. Ihre Zahl kann auch beliebig größer sein, z.B. drei, vier oder mehr. Figur 1, 2 und 4 zeigen eine Fügeeinrichtung (2) mit vier Industrierobotern (3-6).

In der Montierstation (1) sind zwei solche Fügeeinrichtungen (3) und Reihenanordnungen von Industrierobotern (3-6) beidseits und entlang der x-Achse des Werkstückträgers (10) und des dort aufgenommenen Werkstücks (8) angeordnet und ausgerichtet. In anderen Ausführungsformen können nur eine oder mehr als zwei solcher Fügeeinrichtungen (2) vorhanden sein.

Die Industrieroboter (3-6) sind mehrachsig und weisen eine beliebige Zahl und Kombination von rotatorischen und/oder translatorischen Roboterachsen auf. In den gezeigten und bevorzugten Ausführungsformen sind sie als Gelenkarmroboter oder Knickarmroboter mit rotatorischen Roboterachsen ausgebildet. Sie haben z.B. fünf oder sechs rotatorische Roboterachsen. Die Industrieroboter (3-6) besitzen z.B. eine Basis (14) mit einem drehbaren Sockel und zwei schwenkbar mit der Basis (14) und untereinander verbundenen Roboterarmen (15) sowie einem Abtriebsglied (13), das z.B. als Roboterhand mit zwei oder drei rotatorischen Achsen ausgebildet ist und das Fügewerkzeug (7) trägt.

Die Industrieroboter (3-6) können eine zusätzliche Bewegungsachse (16) aufweisen. Dies kann z.B. eine Fahrachse sein, die sich entlang des Werkstückträgers (10) bzw. der besagten x-Achse erstreckt. Die Industrieroboter (3-6) sind bevorzugt stehend angeordnet. Sie können zusammen mit ihrer zusätzlichen Bewegungsachse (16) auf einem Unterbau (17) an einer der beiden des Werkstückträgers (10) in erhabener Position und oberhalb des Werkstücks (8) angeordnet sein. In einer anderen Variante kann auch ein den Werkstückträger (10) und das aufgenommene Werkstück (8) überspannendes Portal mit ein oder mehreren hängend angeordneten Industrierobotern vorgesehen sein.

Die Bereitstellungsposition (42) für das Magazin (39) und die darin enthaltenen Bauteile (9) bzw. Stringer befindet sich jeweils im Arbeitsbereich der Industrieroboter (3-6) einer Fügeeinrichtung (2). Die aufgereihten Industrieroboter (3-6) können mit ihren Fügewerkzeugen (7) gemeinsam ein Bauteil (9) dort entnehmen und an das Werkstück (8) zuführen.

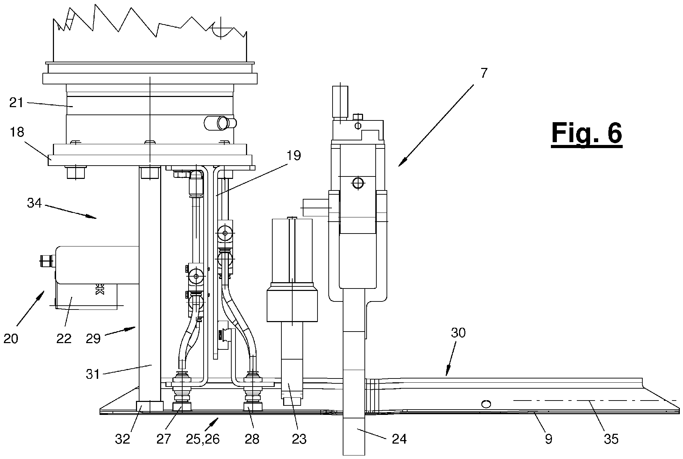

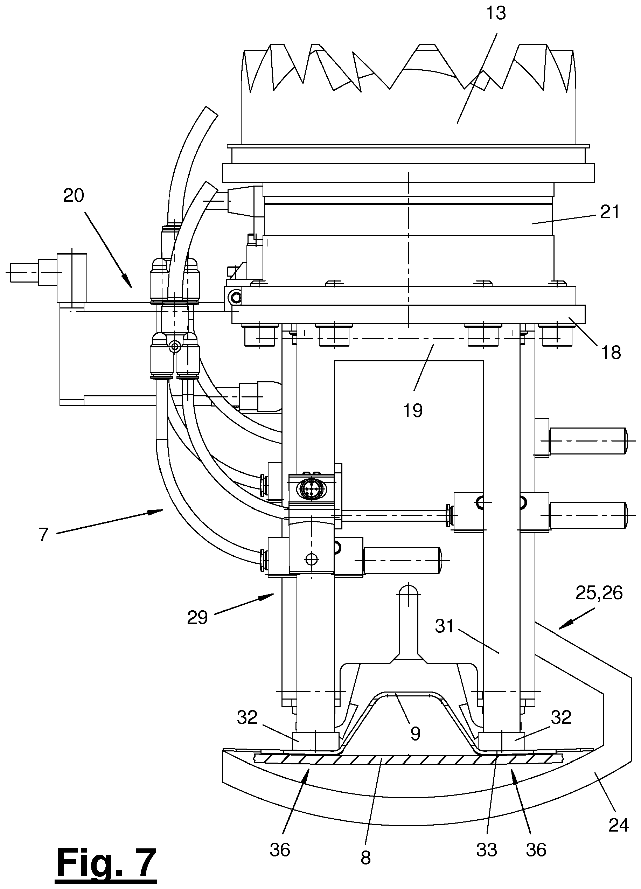

Figur 5-7 zeigen eine bevorzugte Ausführungsform des Fügewerkzeugs (7). Figur 6 und 7 zeigen dabei die Seiten- und Stirnansicht des Fügewerkzeugs (7) entsprechend der Pfeile VI und VII aus der perspektivischen Ansicht von Figur 5.

Das Fügewerkzeug (7) weist ein Gestell (19) mit einem Anschluss (18) zur Verbindung mit dem Abtriebsglied (13) eines Industrieroboters (3-6) auf. Zwischen dem Anschluss (18) und dem Abtriebsglied (13) kann eine automatische Wechselkupplung angeordnet sein.

Das Fügewerkzeug (7) weist ferner ein Greifwerkzeug (25), einen Gegenhalter (29) und ein Positionierwerkzeug (23) für ein Bauteil (9) auf. Zudem kann eine Verliersicherung (24) vorhanden sein, die bei Ausfall des Greifwerkzeugs (25) ein Ablösen des Bauteils (9) vom Fügewerkzeug (7), insbesondere ein Herabfallen, verhindert. Die vorgenannten Komponenten (23,24,25,29) sind ebenfalls am Gestell (19) angeordnet. In Figur 5 bis 7 sind der Übersicht halber nur Teile des Gestells (19) dargestellt.

Das Greifwerkzeug (25) greift an der Bauteiloberseite (30) des Bauteils (9) an. Die Bauteiloberseite (30) liegt der Fügeseite des Bauteils (9) und den z.B. an der Unterseite der beidseitigen Bauteilflansche angeordneten Kontakt- und Fügeflächen gegenüber. Das Bauteil (9) und das Fügewerkzeug (7) haben eine Längsrichtung bzw. eine zentrale Längsachse (35). Sie verläuft in Fügeposition entlang der x-Achse.

Der Gegenhalter (29) ist in Längsrichtung (35) neben dem Greifwerkzeug (25) und in enger Nachbarschaft hierzu angeordnet. Das Positionierwerkzeug (23) ist ebenfalls in Längsrichtung (35) neben dem Greifwerkzeug (25) in enger Nachbarschaft angeordnet. In der gezeigten und bevorzugten Ausführungsform befindet sich das Greifwerkzeug (25) zwischen dem Gegenhalter (29) und dem Positionierwerkzeug (23). Alternativ kann das Greifwerkzeug (25) beidseits vom Gegenhalter (29) angeordnet sein.

Das Greifwerkzeug (25) ist als steuerbarer Hubgreifer (26) ausgebildet, der an der Bauteiloberseite (30) angreift und das Bauteil (9) von oben her bzw. an der Oberseite (30) hält und dabei gegen den Gegenhalter (29) zieht bzw. anlegt. Der Hubgreifer (26) ist in der bevorzugten Ausführungsform als Sauggreifer ausgebildet. Er weist mehrere Saugelemente (27,28) auf, die in Längsrichtung (35) hintereinander angeordnet sind. Die Saugelemente (27,28) können sich auch beidseits der Längsachse (35) befinden und jeweils an einem Bauteilflansch angreifen.

In der gezeigten Ausführungsform befinden sich die Saugelemente (27,28) zwischen dem Gegenhalter (29) und dem Positionierwerkzeug (23). In der vorgenannten Variante kann der Gegenhalter (29) zwischen den Saugelementen (27,28) angeordnet sein.

Das eine und z.B. dem Gegenhalter (29) benachbarte Saugelement (27) kann eine feste Anordnung am Gestell (19) haben. Es hat dabei auch eine feste örtliche Zuordnung gegenüber dem Gegenhalter (29), so dass das angesaugte Bauteil (9) bzw. der jeweilige Bauteilflansch, mit der Oberseite (30) gegen den Gegenhalter (29) gezogen und angelegt wird. Das andere und in Längsrichtung (35) distanzierte Saugelement (28) kann seitlich bzw. quer zur Längsachse (35) beweglich, insbesondere schwimmend am Gestell (19) angeordnet sein.

Der Hubgreifer bzw. Sauggreifer (26) ist steuerbar und kann mit der vorgenannten Steuerung verbunden werden. Die Zuführung von Betriebsmitteln, insbesondere von Druckluft, elektrischen Signal- oder Leistungsstrom oder dgl. zum Hub- bzw. Sauggreifer (26) kann über entsprechende Leitungen vom Industrieroboter (3-6) aus, ggf. über eine Wechselkupplung, oder mittels einer separaten externen Zuführung erfolgen.

Das Positionierwerkzeug (23) sorgt für die exakte Positionierung des Bauteils (9) relativ zum Fügewerkzeug (7) und quer zur Längsachse (35). Dies ist z.B. die in Figur 5 gezeigte y-Achse, wobei die Längsachse (35) sich in Richtung der x-Achse erstreckt.

Das Positionierwerkzeug (23) ist ebenfalls steuerbar sowie mit der besagten Steuerung verbunden. Es kann geöffnet und geschlossen werden. Im gezeigten Ausführungsbeispiel ist das Positionierwerkzeug (23) als Parallelspanner mit zwei Spannbacken ausgebildet, die von oben am erhabenen Bereich (Omega-Wölbung oder T-Steg) des Bauteils (9) beidseits angreifen und Kontaktflächen mit einer an die Bauteilkontur angepassten Formgebung haben. Das Positionierwerkzeug (23) zentriert das zu greifende Bauteil (9) zur zentralen Längsachse (35) des Fügewerkzeugs (7).

Das Bauteil (9) wird zunächst nur mit dem oder den quer beweglichen Saugelementen (28) angesaugt. Anschließend wird das Positionierwerkzeug (23) aktiviert, welches das Bauteil (9) zur Längsachse (35) zentriert, wobei das oder die Saugelemente (28) ggf. seitlich ausweichen bzw. folgen. Anschließend werden der oder die festen Saugelemente (27) angeschaltet, wobei das zentrierte Bauteil (9) fest gegriffen und am Fügewerkzeug (7) fixiert wird.

Dieser Ablauf ist besonders vorteilhaft, wenn die Bauteile (9) bzw. Stringer umgekehrt (Öffnung und Bauteilflansche nach oben) im Bauteilmagazin (39) liegen und von unten nach oben ausgehoben werden. Durch das anfängliche Greifen bzw. Ansaugen kann das Bauteil bei einem Schliessen des Positionierwerkzeugs (23) nicht unerwünscht nach oben ausweichen, insbesondere wenn es bei einer Omega-Form schräge Profilwände oder -schenkel hat.

Bei einem Zentrieren eines "ideal" geraden Bauteils (9) erfolgt ein Positionieren über die Mitte bzw. Längsachse (35), d.h. in der korrekten Lage. Dieser Vorgang erfolgt beim ersten Aufnehmen des Bauteils (9) gleichzeitig an allen Aufnahmepunkten. Ein ggf. "verbogenes" Bauteil (z.B. resultierend aus Bauteilspannungen) wird entsprechend in seine korrekte Form "gebogen".

Der Gegenhalter (29) ist beheizt und wirkt ebenfalls auf die Bauteiloberseite (30) und bevorzugt auf beide Bauteilflansche ein. Der Gegenhalter (29) ist druckfest und starr ausgebildet. Er dient zum Andrücken des Bauteils (9), insbesondere der beaufschlagten Bauteilflansche, am Werkstück (8). Der Gegenhalter (29) dient außerdem zur Einbringung der für den Fügevorgang erforderlichen Energie.

Dies ist in den gezeigten Ausführungsbeispielen Wärmeenergie, die z.B. durch kontaktierende Wärmeleitung vom Gegenhalter (29) in den anliegenden Bauteilbereich und weiter zu der oder den darunterliegenden Kontakt- und Fügeflächen zum Bauteil (9) eingebracht wird. Alternativ ist eine Remoteheizung mit kontaktloser Wärmeübertragung möglich.

Die Energie- und Wärmemenge ist steuerbar und führt zu einem Plastifizieren, insbesondere Anschmelzen des Bauteils (9) und/oder des Werkstücks (8) im Kontakt- und Fügebereich. In einer Variante kann eine plastifizierbare, insbesondere schmelzbare Zwischenschicht zwischen den Teilen (8,9) eingebracht sein.

Die vorgenannte Fügestelle (36) befindet sich im Kraft- und Wärmeeinleitungsbereich des Gegenhalters (29) an Bauteil (9) und Werkstück (8).

Der Gegenhalter (29) ist als Druckstempel (31) ausgebildet, der einen beheizten Druckkopf (32) mit einer Druckfläche (33) trägt, mit der er das Bauteil (9) flächig kontaktiert und beaufschlagt. Der Druckstempel (31) ist z.B. starr ausgebildet und angeordnet. Er kann eine jochartige Form haben. Er kann einen oder mehrere, z.B. zwei, Druckköpfe (32) tragen. In der gezeigten und bevorzugten Ausführungsform sind zwei Druckköpfe (32) vorhanden, die für jeweils einen Bauteilflansch vorgesehen sind.

Die Druckflächen (33) können eine beliebige Querschnittsgestaltung haben. Vorzugsweise sind sie kreisrund oder oval ausgebildet. Die Druckfläche (33) ist jeweils an die Kontur des kontaktierten Bauteilbereichs angepasst. Sie hat z.B. für die an der Oberseite (30) ebenen Bauteilflansche eine entsprechend ebene Form. Falls das Bauteil (9), insbesondere die Bauteilflansche, an der Oberseite (30) eine Profilierung mit Vorsprüngen und/oder Vertiefungen haben sollten, ist die Druckfläche (33) entsprechend, insbesondere komplementär, konturiert und profiliert.

Der Druckkopf (32) ist als steuerbares Heizelement ausgebildet oder weist ein integriertes steuerbares Heizelement auf. Das Heizelement kann in beliebig geeigneter Weise Wärme erzeugen, die mit Kontakt oder berührungslos zum Bauteil (9) und/oder Werkstück (8) übertragen wird. Es ist z.B. als elektrisches Heizelement ausgebildet. Das ggf. mehrfach vorhandene Heizelement ist Bestandteil einer Heizeinrichtung (34), deren weitere Bestandteile am Fügewerkzeug (7) oder ggf. an anderer Stelle, insbesondere am zugeordneten Industrieroboter (3-6) angeordnet sind. Es kann auch eine gemeinsame Heizeinrichtung (34) für mehrere Fügewerkzeuge (7) vorgesehen sein.

Die Heizeinrichtung (34) weist eine geeignete Energieversorgung und eine Steuerung sowie eine Sensorik zum Messen der Temperatur und/oder der Wärmemenge auf. Die Heizeinrichtung (34) ist steuerbar und ist ebenfalls mit der besagten Steuerung verbunden. Die an der Fügestelle (36) eingebrachte Wärmemenge kann gesteuert oder ggf. auch geregelt werden.

Die Verliersicherung (24) kann an beliebig geeigneter Stelle des Fügewerkzeugs (7) angeordnet sein. Vorzugsweise ist sie mit dem Positionierwerkzeug (23) kombiniert oder mit engem Abstand daneben angeordnet. Das Fügewerkzeug (7) hat in Längsrichtung (35) eine enge Komponentenanordnung und eine kompakte Bauweise. Die Verliersicherung (24) ist z.B. als steuerbarer Untergriffspanner ausgebildet, dessen Spannarm in Schließstellung das Bauteil (9) untergreift und zum Zustellen und Fügen des gegriffen Bauteils (9) in eine Ruhestellung weggeschwenkt wird.

Das Fügen eines Bauteils (9) an ein Werkstück (8) kann in verschiedener Weise stattfinden. In der einen Variante können die zwei oder mehr Industrieroboter (3-6) das gemeinsam gegriffene Bauteil (9) vor dem Fügen parallel bzw. äquidistant zum Werkstück (8) ausrichten und dann zum Fügen gemeinsam und gleichzeitig an das Werkstück (8) andrücken und an den Fügestellen (36) beheizen. Die Zahl der Fügestellen (36) entspricht dabei der Zahl der Industrieroboter (3-6) und der Fügewerkzeuge (7). Wenn eine größere Zahl von Fügestellen (36) benötigt wird, können ein oder mehrere Industrieroboter (3-6) nach Beendigung des ersten Fügevorgangs ihr Fügewerkzeug (7) öffnen, vom Bauteil (9) lösen und zu einer anderen Bauteilstelle transportieren, dort greifen und erneut andrücken und beheizen. Die Versatzbewegung des Fügewerkzeugs (7) entlang der Längsrichtung (35) des Bauteils (9) kann mittels einer Roboterachse oder mittels der Fahrachse (16) bewirkt werden.

In einer anderen Variante kann das Fügen mit Zustellen, Andrücken und Beheizen des gegriffenen Bauteils (9) in einer abwälzartigen Weise erfolgen. Bei der in Figur 3 gezeigten Variante der Fügeeinrichtung (2) kann z.B. der Industrieroboter (3) mit seinem Fügewerkzeug (7) das Bauteil (9) am einen Ende greifen, an das Werkstück (8) zustellen und zur Bildung einer endseitigen Fügestelle (36) andrücken und beheizen. Der andere Industrieroboter (4) hält dabei mit seinem Fügewerkzeug (7) den anderen Endbereich des Werkstücks (9) in einer schwebenden und vom Werkstück (8) distanzierten Lage. Nach Bildung der ersten Fügestelle (36) lässt der Industrieroboter (3) das Bauteil (9) los, greift um und fasst das Bauteil an einer anderen, noch vom Werkstück (8) distanzierten Stelle und fügt es unter Bildung der nächsten Fügestelle (36). Dieser Vorgang kann mehrfach wiederholt werden, wobei der andere Industrieroboter (4) das Bauteil (9) ggf. schrittweise an das Werkstück (8) annähert.

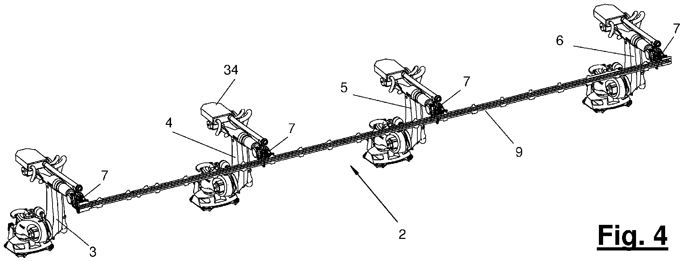

Der abwälzartige heftende Fügevorgang kann auch mit einer größeren Zahl von Industrierobotern (3-6) gemäß Figur 4 vorgenommen werden.

Beim gezeigten und beschriebenen Fügeprozess soll das Bauteil (9) exakt am Werkstück (8) positioniert werden. Zu diesem Zweck sind eine externe und bevorzugt stationäre Messeinrichtung (12) sowie an den Industrierobotern (3-6), insbesondere an deren Fügewerkzeugen (7), eine mitgeführte Sensoreinrichtung (20) vorhanden. Die Messeinrichtung (12) und die Sensoreinrichtung (20) sind mit der besagten Steuerung verbunden.

Die externe Messeinrichtung (12) ist z.B. gemäß Figur 1 und 2 zentral und stationär angeordnet. Sie vermisst die Position der Bauteile (9) und ggf. auch der Fügewerkzeuge (7), insbesondere ihrer Positionierwerkzeuge (23) im Raum und relativ zum Werkstück (8). Etwaige Positionier- und/oder Orientierungsfehler eines Industrieroboters (3-6) und seines Fügewerkzeugs (7) können dabei erfasst und über die Steuerung korrigiert werden. Das Bauteil (9) kann dadurch in der vorgegebenen Soll-Position mit dem Fügewerkzeug (7) gegriffen und nachfolgend an das Werkstück (8) zugestellt und angedrückt werden.

Der Industrieroboter (3-6) drückt beim Fügen den Gegenhalter (29) des Fügewerkzeugs (7) und das gegriffene Bauteil (9) mit einer definierten, insbesondere steuerbaren oder regelbaren Kraft an das Werkstück (8). Die mitgeführte Sensoreinrichtung (20) dient zur Steuerung und ggf. Regelung des Fügeprozesses.

Die mitgeführte Sensoreinrichtung (20) kann einen oder mehrere Sensoren (21,22) aufweisen. Ein solcher Sensor kann ein mechanische Belastungen aufnehmender Sensor (21) sein, mit dem die beim Fügen wirkende Andrückkraft des Industrieroboters (3-6) in einer oder mehreren Achsen, vorzugsweise in allen sechs Raumachsen erfasst werden kann. Der Sensor (21) kann z.B. als 6D-Kraftsensor oder als Kraft-Momenten-System ausgebildet sein. Er ist dem Fügewerkzeug (7) zugeordnet und kann sich an einer geeigneten Stelle im Kraftfluss befinden.

Beispielsweise ist er zwischen dem Anschluss (18) und dem Abtriebsglied (13) bzw. der Wechselkupplung angeordnet. Ein solcher Sensor (21) kann in einer anderen Variante in das Fügewerkzeug (7) integriert sein. Ferner ist es möglich, einen taktilen Industrieroboter mit einer integrierten und an den Roboterachsen angeordneten Sensorik einzusetzen, welche die extern einwirkenden Belastungen, insbesondere Momente, aufnimmt.

Ein anderer Sensor (22) kann zur Positionserfassung von Bauteil (9) und/oder Fügewerkzeug (7) dienen. Er ist einzeln oder mehrfach vorhanden und z.B. am Gestell (19) und in axialer Nähe zum Gegenhalter (29) sowie mit Abstand schwebend über dem gegriffenen Bauteil (9) angeordnet. Er hat eine definierte Lage gegenüber dem Gegenhalter (29) und erfasst bevorzugt berührungslos, insbesondere optisch, das Bauteil (9) und/oder das Werkstück (8).

Er kann z.B. als Abstandssensor ausgebildet sein, der optisch per Laserstrahl oder auf andere Weise, z.B. induktiv oder kapazitiv, den Abstand zum Bauteil (9) misst. Er kann alternativ oder zusätzlich als kantentastender Sensor ausgebildet sein, der am Rand des Fügewerkwerkzeugs (7) angeordnet und auf den stirnseitigen Rand des Bauteils (9) und ggf. des Werkstücks (8) gerichtet ist. Ein solcher Sensor (22) kann z.B. als Lasersensor ausgebildet sein.

Der Positionssensor (22) kann insbesondere das freie Ende des Bauteils (9) zur positionsgenauen Bildung der ersten endseitigen Fügestelle (36) detektieren. Er kann andererseits auch den Rand bzw. das axiale Ende des Werkstücks (8) detektieren, um die korrekte axiale Relativposition von Bauteil (9) und Werkstück (8) zum Fügen herzustellen. Figur 3 zeigt den Industrieroboter (3) mit dem positionsgenau gegriffenen Bauteilende.

Mit der Messeinrichtung (12) und der Sensoreinrichtung (20) kann die absolut genau eingemessene Fügeeinrichtung (2) an die Ist-Lage und die Ist-Ausrichtung des Werkstücks (8) und des gegriffenen Bauteils (9) adaptiert und bei Abweichungen nachgeführt werden. Hierüber ist eine exakte Positionierung, Ausrichtung und Zustellung des Bauteils (9) an das Werkstück (8) möglich.

Abwandlungen der gezeigten und beschriebenen Ausführungsbeispiele sind in beliebiger Weise möglich. Insbesondere können deren Merkmale beliebig miteinander kombiniert, insbesondere vertauscht werden.

Die Fügeeinrichtung (2) kann statt der gezeigten und bevorzugten Industrieroboter (3-6) andere einachsig oder mehrachsig beweglichen Aktoren oder Handlingeinrichtungen aufweisen. Die Fügeverbindung kann auf andere physikalische Weise und mit Einsatz einer anderen Energieform durchgeführt werden. Zum Beispiel kann mit elektrischen oder elektromagnetischen Feldern, insbesondere Wechselfeldern, mit Strahlungsenergie oder dgl. gearbeitet werden.

Die Fügeeinrichtung und das Fügeverfahren können außerdem in anderen technischen Bereichen eingesetzt und adaptiert werden. Dies kann z.B. der Bau von Fahrzeugkarosserien oder Fahrzeugaufbauten, insbesondere Lkw-Aufbauten sein. Außerdem können das Bauteil (9) und das Werkstück (8) eine andere Form haben und aus anderen Werkstoffen bestehen. Am Bauteil (9) und/oder am Werkstück (8) können spezielle vorbereitete Fügestellen, z.B. lokale Plattformen, ausgebildet werden. Ferner kann die Fügeeinrichtung (2) die am Werkstück (8) und/oder Bauteil (9) vorgesehenen Fügestellen vorpräparieren, z.B. durch einen Wärmeeintrag und/oder den Auftrag eines Klebe- oder Bindemittels oder auf andere Weise.

### BEZUGSZEICHENLISTE

- 1: Montierstation
- 2: Fügeeinrichtung
- 3: Industrieroboter
- 4: Industrieroboter
- 5: Industrieroboter
- 6: Industrieroboter
- 7: Fügewerkzeug
- 8: Werkstück, Flächenstruktur, Skin
- 9: Bauteil, Stringer
- 10: Werkstückträger
- 11: Bauteilzuführung
- 12: Messeinrichtung extern, Lasertracker
- 13: Abtriebsglied, Roboterhand
- 14: Basis
- 15: Roboterarm
- 16: zusätzliche Bewegungsachse, Fahrachse
- 17: Unterbau
- 18: Anschluss, Roboteranschluss
- 19: Gestell
- 20: Sensoreinrichtung
- 21: Sensor, Belastungssensor
- 22: Sensor, Positionssensor
- 23: Positionierwerkzeug, Parallelspanner
- 24: Verliersicherung, Untergriffspanner
- 25: Greifwerkzeug
- 26: Hubgreifer, Sauggreifer
- 27: Saugelement fest
- 28: Saugelement schwimmend
- 29: Gegenhalter, Bauteilanlage
- 30: Bauteiloberseite
- 31: Druckstempel
- 32: Druckkopf, Heizelement
- 33: Druckfläche
- 34: Heizeinrichtung
- 35: Längsrichtung, zentrale Längsachse
- 36: Fügestelle
- 37: Gestell, Untergestell
- 38: Werkstückaufnahme
- 39: Magazin, Bauteilrack
- 40: Zuführgerät
- 41: Ladeposition
- 42: Bereitstellungsposition

## Patentansprüche

1. Fügewerkzeug zum passgenauen Fügen von vorzugsweise länglichen Bauteilen (9), insbesondere Stringern, an flexiblen Werkstücken (8), insbesondere Flächenstrukturen, wobei das Fügewerkzeug (7) beheizbar ist und einen Anschluss (18) für einen Industrieroboter (3-6) sowie ein Greifwerkzeug (25) für ein Bauteil (9) aufweist, **dadurch gekennzeichnet, dass** das Greifwerkzeug (25) einen an der Bauteiloberseite (30) angreifenden steuerbaren Hubgreifer (26), insbesondere Sauggreifer, und einen daneben angeordneten, beheizten Gegenhalter (29) aufweist, der ebenfalls auf die Bauteiloberseite (30) einwirkt.

2. Fügewerkzeug nach Anspruch 1, **dadurch gekennzeichnet, dass** der Gegenhalter (29) als bevorzugt starr ausgebildeter und angeordneter Druckstempel (31) mit einem beheizten Druckkopf (32) ausgebildet ist, welcher eine Druckfläche (33) aufweist.

3. Fügewerkzeug nach Anspruch 1 oder 2, **dadurch gekennzeichnet, dass** der Sauggreifer (26) mehrere Saugelemente (27,28) aufweist, die in Längsrichtung (35) des Bauteils (9) hintereinander angeordnet sind, wobei ein Saugelement (27) fest und das andere Saugelement (28) seitlich bzw. quer zur Längsrichtung (35), insbesondere schwimmend, angeordnet ist.

4. Fügewerkzeug nach einem der vorhergehenden Ansprüche, **dadurch gekennzeichnet, dass** das Fügewerkzeug (7) mehrere Druckköpfe (32) und mehrere Saugelemente (27,28) aufweist, die jeweils paarweise und mit Abstand beidseits einer zentralen Längsachse (35) angeordnet sind.

5. Fügewerkzeug nach einem der vorhergehenden Ansprüche, **dadurch gekennzeichnet, dass** das Fügewerkzeug (7) ein Positionierwerkzeug (23), insbesondere einen Parallelspanner, für das zu greifende Bauteil (9) aufweist.

6. Fügewerkzeug nach einem der vorhergehenden Ansprüche, **dadurch gekennzeichnet, dass** das Fügewerkzeug (7) eine steuerbare Verliersicherung (24), insbesondere einen Untergriffspanner, für das Bauteil (9) aufweist.

7. Einrichtung zum passgenauen Fügen von vorzugsweise länglichen Bauteilen (9), insbesondere Stringern, an flexiblen Werkstücken (8), insbesondere Flächenstrukturen, wobei die Fügeeinrichtung (2) mehrere Industrieroboter (3-6) mit Fügewerkzeugen (7) zum gemeinsamen Handhaben und Fügen des Bauteils (9) aufweist, **dadurch gekennzeichnet, dass** die Fügewerkzeuge (7) nach einem der Ansprüche 1 bis 6 ausgebildet sind.

8. Fügeeinrichtung nach Anspruch 7, **dadurch gekennzeichnet, dass** die Industrieroboter (3-6) derart ausgebildet und gesteuert sind, dass sie das Bauteil (9) vor dem Fügen parallel bzw. äquidistant zum Werkstück (8) ausrichten und dann zum Fügen gemeinsam an das Werkstück (8) andrücken und beheizen oder dass die Industrieroboter (3-6) derart ausgebildet und gesteuert sind, dass mehrere Industrieroboter (4-6) das Bauteil (9) zunächst schwebend halten und dann in einer Abfolge nacheinander an das Werkstück (8) andrücken und stellenweise fügen.

9. Fügeeinrichtung nach Anspruch 7 oder 8, **dadurch gekennzeichnet, dass** die Fügeeinrichtung (2) eine bevorzugt mitgeführte Sensoreinrichtung (20) aufweist, wobei bevorzugt die Sensoreinrichtung (20) einen mechanische Belastungen aufnehmenden Sensor (21) aufweist, der dem Fügewerkzeug (7) zugeordnet ist, und/oder die Sensoreinrichtung (20) einen Sensor (22) am Fügewerkzeug (7) aufweist, der die Position, insbesondere die Axialposition, des gegriffenen Bauteils (9) relativ zum Werkstück (8) oder zu einem Werkstückträger (10) oder im Greifwerkzeug (15) detektiert.

10. Fügeeinrichtung nach Anspruch 7, 8 oder 9, **dadurch gekennzeichnet, dass** die Fügeeinrichtung (2) eine externe Messeinrichtung (12), insbesondere einen Lasertracker, für den Fügeprozess aufweist.

11. Verfahren zum passgenauen Fügen von vorzugsweise länglichen Bauteilen (9), insbesondere Stringern, an flexiblen Werkstücken (8), insbesondere Flächenstrukturen, mit einer Fügeeinrichtung (2), die mehrere Industrieroboter (3-6) mit Fügewerkzeugen (7) zum gemeinsamen Handhaben und Fügen des Bauteils (9) aufweist, wobei die Fügewerkzeuge (7) beheizt werden und mit einem Greifwerkzeug (25) das Bauteil (9) greifen, **dadurch gekennzeichnet, dass** das Greifwerkzeug (25) das Bauteil (9) an der Bauteiloberseite (30) mit einem steuerbaren Hubgreifer (26), insbesondere Sauggreifer, angreift und mit einem daneben angeordneten, beheizten Gegenhalter (29) ebenfalls auf die Bauteiloberseite (30) einwirkt.

12. Verfahren nach Anspruch 11, **dadurch gekennzeichnet, dass** die Industrieroboter (3-6) das Bauteil (9) vor dem Fügen parallel bzw. äquidistant zum Werkstück (8) ausrichten und dann zum Fügen gemeinsam an das Werkstück (8) andrücken und beheizen oder dass mehrere Industrieroboter (4-6) das Bauteil (9) zunächst schwebend halten und dann in einer Abfolge nacheinander an das Werkstück (8) andrücken und stellenweise fügen.

13. Verfahren nach Anspruch 11 oder 12, **dadurch gekennzeichnet, dass** mit einem Sensor (22) am Fügewerkzeug (7) die Position, insbesondere die Axialposition, des gegriffenen Bauteils (9) relativ zum Werkstück (8) oder zu einem Werkstückträger (10) und/oder im Greifwerkzeug (15) detektiert wird oder mit einem Sensor (22) am Fügewerkzeug (7) die mechanische Belastung aufgenommen wird.

14. Verfahren nach einem der Ansprüche 11 bis 13, **dadurch gekennzeichnet, dass** der steuerbare Hubgreifer (26) an der Bauteiloberseite (30) angreift und das Bauteil (9) an der Oberseite (30) hält und dabei gegen den Gegenhalter (29) zieht und anlegt.

15. Verfahren nach einem der Ansprüche 11 bis 14, **dadurch gekennzeichnet, dass** der druckfest und starr ausgebildete Gegenhalter (29) zum Andrücken des Bauteils (9) am Werkstück (8) dient.

## Claims

1. Joining tool for the accurately fitting joining of preferably elongated components (9), in particular stringers, to flexible workpieces (8), in particular surface structures, wherein the joining tool (7) is heatable and has a connection (18) for an industrial robot (3-6) and a gripping tool (25) for a component (9), **characterized in that** the gripping tool (25) has a controllable lifting gripper (26) acting on the component upper side (30), in particular a suction gripper, and a heated counter-holder (29) arranged alongside, which likewise acts on the component upper side (30).

2. Joining tool according to Claim 1, **characterized in that** the counter-holder (29) is designed as a preferably rigidly formed and arranged pressure ram (31) with a heated pressure head (32) which has a pressure surface (33) .

3. Joining tool according to Claim 1 or 2, **characterized in that** the suction gripper (26) has a plurality of suction elements (27, 28), which are arranged one after another in the longitudinal direction (35) of the component (9), wherein one suction element (27) is arranged fixedly and the other suction element (28) is arranged laterally or transversely with respect to the longitudinal direction (35), in particular in a floating manner.

4. Joining tool according to one of the preceding claims, **characterized in that** the joining tool (7) has a plurality of pressure heads (32) and a plurality of suction elements (27, 28), which are each arranged in pairs and at a distance on both sides of a central longitudinal axis (35).

5. Joining tool according to one of the preceding claims, **characterized in that** the joining tool (7) has a positioning tool (23), in particular a parallel clamp, for the component (9) to be gripped.

6. Joining tool according to one of the preceding claims, **characterized in that** the joining tool (7) has a controllable loss prevention device (24), in particular an under-grip clamp, for the component (9).

7. Device for the accurately fitting joining of preferably elongated components (9), in particular stringers, to flexible workpieces (8), in particular surface structures, wherein the joining device (2) has a plurality of industrial robots (3-6) with joining tools (7) for the combined handling and joining of the component (9), **characterized in that** the joining tools (7) are designed according to one of Claims 1 to 6.

8. Joining device according to Claim 7, **characterized in that** the industrial robots (3-6) are designed and controlled in such a way that they align the component (9) parallel and equally distant from the workpiece (8) before the joining and then press jointly on and heat the workpiece (8) for the joining, or **in that** the industrial robots (3-6) are designed and controlled in such a way that a plurality of industrial robots (4-6) initially hold the component (9) in a floating manner and then press successively on the workpiece (8) in a sequence and join it at some points.

9. Joining device according to Claim 7 or 8, **characterized in that** the joining device (2) has a sensor device (20) that is preferably carried along, wherein the sensor device (20) preferably has a sensor (21) sensing mechanical loadings, which is assigned to the joining tool (7), and/or the sensor device (20) has a sensor (22) on the joining tool (7), which detects the position, in particular the axial position, of the gripped component (9) relative to the workpiece (8) or to a workpiece carrier (10) or in the gripping tool (15).

10. Joining device according to Claim 7, 8 or 9, **characterized in that** the joining device (2) has an external measuring device (12), in particular a laser tracker, for the joining process.

11. Method for the accurately fitting joining of preferably elongated components (9) in particular stringers, to flexible workpieces (8), in particular surface structures, having a joining device (2), which has a plurality of industrial robots (3-6) with joining tools (7) for the combined handling and joining of the component (9), wherein the joining tools (7) are heated and grip the component (9) with a gripping tool (25), **characterized in that** the gripping tool (25) acts on the component (9) on the component upper side (30) with a controllable lifting gripper (26), in particular a suction gripper, and likewise acts on the component upper side (30) with a heated counter-holder (29) arranged beside it.

12. Method according to Claim 11, **characterized in that** the industrial robots (3-6) align the component (9) parallel and equally distant from the workpiece (8) before the joining and then press jointly on and heat the workpiece (8) for the joining, or **in that** a plurality of industrial robots (4-6) initially hold the component (9) in a floating manner and then press successively on the workpiece (8) in a sequence and join it at some points.

13. Method according to Claim 11 or 12, **characterized in that** the position, in particular the axial position, of the gripped component (9) relative to the workpiece (8) or to a workpiece carrier (10) and/or in the gripping tool (15) is detected by using a sensor (22) on the joining tool (7), or the mechanical loading is sensed by using a sensor (22) on the joining tool (7).

14. Method according to one of Claims 11 to 13, **characterized in that** the controllable lifting gripper (26) acts on the component upper side (30) and holds the component (9) on the upper side (30) and in the process draws it against and places it on the counter-holder (29) .

15. Method according to one of Claims 11 to 14, **characterized in that** the pressure-resistant and rigid counter-holder (29) is used to press the component (9) onto the workpiece (8).

## Revendications

1. Outil d'assemblage pour l'assemblage avec précision d'éléments structuraux (9) de préférence allongés, notamment des longerons, à des pièces ouvrées (8) flexibles, notamment des structures planes, l'outil d'assemblage (7) pouvant être chauffé et possédant un raccord (18) pour un robot industriel (3-6) ainsi qu'un outil de préhension (25) pour un élément structural (9), **caractérisé en ce que** l'outil de préhension (25) possède un organe de préhension de levage (26), notamment un organe de préhension à aspiration, commandable qui vient en prise au niveau du côté supérieur d'élément structural (30), et un appui antagoniste (29) chauffé, disposé à côté de celui-ci et qui agit lui aussi sur le côté supérieur d'élément structural (30).

2. Outil d'assemblage selon la revendication 1, **caractérisé en ce que** l'appui antagoniste (29) est réalisé sous la forme d'un poinçon presseur (31), de préférence configuré et disposé de manière rigide, comprenant une tête de pressage (32), laquelle possède une surface de pressage (33).

3. Outil d'assemblage selon la revendication 1 ou 2, **caractérisé en ce que** l'organe de préhension à aspiration (26) possède plusieurs éléments d'aspiration (27, 28), lesquels sont disposés les uns derrière les autres dans la direction longitudinale (35) de l'élément structural (9), un élément d'aspiration (27) étant disposé en position fixe et l'autre élément d'aspiration (28) latéralement ou transversalement par rapport à la direction longitudinale (35), notamment flottant.

4. Outil d'assemblage selon l'une des revendications précédentes, **caractérisé en ce que** l'outil d'assemblage (7) possède plusieurs têtes de pressage (32) et plusieurs éléments d'aspiration (27, 28), lesquels sont disposés respectivement par paires et avec un écart des deux côtés d'un axe longitudinal central (35).

5. Outil d'assemblage selon l'une des revendications précédentes, **caractérisé en ce que** l'outil d'assemblage (7) possède un outil de positionnement (23), notamment un dispositif de serrage en parallèle, pour l'élément structural (9) à saisir.

6. Outil d'assemblage selon l'une des revendications précédentes, **caractérisé en ce que** l'outil d'assemblage (7) possède une sécurité anti-perte (24) commandable, notamment un outil de serrage à prise par le dessous, pour l'élément structural (9).

7. Dispositif pour l'assemblage avec précision d'éléments structuraux (9) de préférence allongés, notamment des longerons, à des pièces ouvrées (8) flexibles, notamment des structures planes, le dispositif d'assemblage (2) possédant plusieurs robots industriels (3-6) pourvus d'outils d'assemblage (7) servant à la manipulation et à l'assemblage en commun de l'élément structural (9), **caractérisé en ce que** les outils d'assemblage (7) sont configurés selon l'une des revendications 1 à 6.

8. Dispositif d'assemblage selon la revendication 7, **caractérisé en ce que** les robots industriels (3-6) sont configurés et commandés de telle sorte qu'ils alignent l'élément structural (9) parallèlement ou de manière équidistante par rapport à la pièce ouvrée (8) avant l'assemblage et ensuite la pressent ensemble contre la pièce ouvrée (8) et la chauffent en vue de l'assemblage, ou **en ce que** les robots industriels (3-6) sont configurés et commandés de telle sorte que plusieurs robots industriels (4-6) maintiennent tout d'abord l'élément structural (9) de manière flottante et ensuite le pressent contre la pièce ouvrée (8) l'un après l'autre selon une séquence puis l'assemblent point par point.

9. Dispositif d'assemblage selon la revendication 7 ou 8, **caractérisé en ce que** le dispositif d'assemblage (2) possède un dispositif capteur (20) de préférence accompagnant le mouvement, le dispositif capteur (20) possédant de préférence un capteur (21) qui enregistre les contraintes mécaniques, lequel est associé à l'outil d'assemblage (7), et/ou le dispositif capteur (20) possédant un capteur (22) au niveau de l'outil d'assemblage (7), lequel détecte la position, notamment la position axiale, de l'élément structural (9) saisi par rapport à la pièce ouvrée (8) ou par rapport à un porte-pièce (10) ou dans l'outil de préhension (15).

10. Dispositif d'assemblage selon la revendication 7, 8 ou 9, **caractérisé en ce que** le dispositif d'assemblage (2) possède un dispositif de mesure externe (12), notamment un dispositif de suivi à laser, pour le processus d'assemblage.

11. Procédé d'assemblage avec précision d'éléments structuraux (9) de préférence allongés, notamment des longerons, à des pièces ouvrées (8) flexibles, notamment des structures planes, comprenant un dispositif d'assemblage (2) qui possède plusieurs robots industriels (3-6) pourvus d'outils d'assemblage (7) servant à la manipulation et à l'assemblage en commun de l'élément structural (9), les outils d'assemblage (7) étant chauffés et saisissant l'élément structural (9) au niveau du côté supérieur d'élément structural (30) avec un outil de préhension (25), **caractérisé en ce que** l'outil de préhension (25) vient en prise avec l'élément structural (9) au niveau du côté supérieur d'élément structural (30) avec un organe de préhension de levage (26), notamment un organe de préhension à aspiration, commandable, et agit également sur le côté supérieur d'élément structural (30) avec un appui antagoniste (29) chauffé, disposé à côté de celui-ci.

12. Procédé selon la revendication 11, **caractérisé en ce que** les robots industriels (3-6) alignent l'élément structural (9) parallèlement ou de manière équidistante par rapport à la pièce ouvrée (8) avant l'assemblage et ensuite la pressent ensemble contre la pièce ouvrée (8) et la chauffent en vue de l'assemblage, ou **en ce que** plusieurs robots industriels (4-6) maintiennent tout d'abord l'élément structural (9) de manière flottante et ensuite le pressent contre la pièce ouvrée (8) l'un après l'autre selon une séquence puis l'assemblent point par point.

13. Procédé selon la revendication 11 ou 12, **caractérisé en ce que** la position, notamment la position axiale, de l'élément structural (9) saisi par rapport à la pièce ouvrée (8) ou par rapport à un porte-pièce (10) et/ou dans l'outil de préhension (15) est détectée avec un capteur (22) au niveau de l'outil d'assemblage (7) ou la contrainte mécanique étant enregistrée avec un capteur (22) au niveau de l'outil d'assemblage (7).

14. Procédé selon l'une des revendications 11 à 13, **caractérisé en ce que** l'organe de préhension de levage (26) commandable vient en prise au niveau du côté supérieur d'élément structural (30) et maintient l'élément structural (9) au niveau du côté supérieur (30) et le tire ainsi et l'applique contre l'appui antagoniste (29) .

15. Procédé selon l'une des revendications 11 à 14, **caractérisé en ce que** l'appui antagoniste (29) de configuration résistante à la pression et rigide sert à presser l'élément structural (9) contre la pièce ouvrée (8) .
